(19) Europäisches Patentamt
European Patent Office
Office européen des brevets

(11) EP 2 296 249 B1

(12) EUROPEAN PATENT SPECIFICATION

(45) Date of publication and mention
of the grant of the patent:
**30.04.2014 Bulletin 2014/18**

(51) Int Cl.:
*H02J 7/00* (2006.01)

(21) Application number: **10152776.0**

(22) Date of filing: **05.02.2010**

(54) **Protection circuit for battery pack and battery pack comprising the same**

Schutzschaltung für Batteriepack und Batteriepack damit

Circuit de protection pour bloc-batterie et bloc-batterie le comprenant

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **05.02.2009 KR 20090009452
02.02.2010 KR 20100009430**

(43) Date of publication of application:
**16.03.2011 Bulletin 2011/11**

(73) Proprietor: **Samsung SDI Co., Ltd.
Gyeonggi-do (KR)**

(72) Inventors:
• **Lee, Woojin**
  **Gyeonggi-do,, Yongin-si (KR)**
• **Hur, Jonghwa**
  **Gyeonggi-do,, Yongin-si (KR)**

(74) Representative: **Rasch, Dorit
Anwaltskanzlei
Gulde Hengelhaupt Ziebig & Schneider
Wallstrasse 58/59
10179 Berlin (DE)**

(56) References cited:
**EP-A- 1 096 637        GB-A- 2 226 716
JP-A- 2006 352 998    US-A1- 2008 018 304**

## Description

### Field of the Invention

The present invention relates to a protection circuit for a battery pack and a battery pack comprising the same.

### Description of the Related Art

A portable electronic equipment mounted inside a vehicle is exposed to an internal heat of the vehicle and an external heat introduced from an outside such as direct sunlight.

In particular, a portable electronic equipment, such as a navigator, is mounted inside a vehicle during use of the vehicle. In particular, in the summer season, the interior temperature of the vehicle can reach above 60°C, and the navigator is used in a high temperature environment.

In this navigator, a battery pack comprising a protection circuit and a rechargeable battery cell (for example, a lithium ion battery or a lithium polymer battery) for powering the navigator so that the navigator can be operated for several hours without using the power of the vehicle.

However, almost all users power the navigator mounted inside the vehicle by electrically connecting the navigator to the power source of the vehicle.

In this case, the battery pack mounted to the navigator is continuously being charged, and so the battery cell of the battery pack is charged to the full-charge voltage.

However, when the battery pack included in the navigator remains in the vehicle at a high temperature in the summer season, it becomes overheated by the interior temperature of the vehicle and by heat generated by the battery cell itself.

In this case, since the overcharging state of the battery cell is maintained in a high temperature, a swelling phenomenon is generated so that the battery cell becomes a danger state. EP 1 096 637 A1 discloses a rechargeable battery control circuit, comprising a temperature detection section for detecting a temperature of the secondary battery and a forced discharge logic that turns on a switch provided between the negative terminal and a B+ terminal, whereby the secondary battery is forcibly discharged. US 2008/018304 A1 discloses a protection circuit for a battery pack, comprising a thermistor for indicating a temperature of a cell in the battery pack. GB 2 226 716 A discloses an electrical handtool with power supply independent of the mains, comprising a protective switch that is automatically opened to disconnect a motor of the handtool if either one of series-connected battery packs has a low charge level.

JP 2006 352 998 A discloses a protection circuit corresponding to the preamble of claim 1.

## SUMMARY OF THE INVENTION

It is therefore an aspect of the present invention to provide a protection circuit for a battery pack, which can stop a charge of a battery cell and self-discharge compulsorily the battery cell under a high temperature environment to inhibit a generation of swelling in the battery cell and to enhance a stability of the battery cell. The present invention is set forth in claim 1.

In accordance with an embodiment of the present invention, there is provided a protection circuit for a battery pack including a rechargeable battery cell having a positive electrode and a negative electrode, the protection circuit comprises a self-discharge switching device connected electrically to the positive electrode and the negative electrode of the battery cell; and a control unit connected electrically to the battery cell and the self-discharge switching device to turn-on or turn-off the self-discharge switching device according to or as a function of a temperature of the battery cell. In addition, the protection circuit of the present invention further comprises a charge switching device connected electrically between the battery cell and the control unit.

In the protection circuit, the self-discharge switching device is electrically connected to the charge switching device, the charge switching device becomes turned-off if the self-discharge switching device is turned-on, and the charge switching device becomes turned-on if the self-discharge switching device is turned-off.

The protection circuit may further comprise a temperature sensor connected electrically to the battery cell and the control unit. The temperature sensor senses a temperature of the battery cell and the control unit turns-on the self-discharge switching device if the sensed temperature of the battery cell is above a reference temperature. According to the present invention, a gate of the self discharging FET is electrically connected to the control unit and the gate of the changing FET.

It is preferable that the reference temperature is in a range of 40°C to 75°C, preferably in the range of 45°C to 70°C, even more preferably within a range of 46° to 65°C, and the temperature sensor comprises a thermistor. In particular, the temperature sensor may further comprise a resistor for setting a sensing temperature.

The control unit senses a voltage of the battery cell and turns-on the self-discharge switching device if the voltage of the battery cell is above a reference voltage.

The protection circuit may further comprise a self-discharge resistor connected electrically between the battery cell and the self-discharge switching device. In addition, the protection circuit may further comprise a self-discharge indicating member connected electrically between the battery cell and the self-discharge switching device.

The protection circuit may further comprise a resistor connected electrically between the battery cell and the self-discharge indicating member for protecting the self-discharge indicating member

In the protection circuit, the control unit may comprise a temperature sensing unit connected electrically to the temperature sensor to sense a temperature of the battery cell; a voltage sensing unit connected electrically to the battery cell to sense a voltage of the battery cell; and a driving circuit connected electrically to the charge switching device and the self-discharge switching device to turn-on or turn-off the charge switching device and the self-discharge switching device according to or as a function of the temperature sensed by the temperature sensing unit and the voltage sensed by the voltage sensing unit.

**BRIEF DESCRIPTION OF THE DRAWINGS**

The features and aspects of the present invention will be more apparent from the following detailed description in conjunction with the accompanying drawing, in which:

Fig. 1 is a schematic block diagram of a battery pack according to an embodiment of the present invention;
Fig. 2 is flow chart for illustrating an operation sequence of a battery pack according to an embodiment of the present invention; and
Fig. 3 is flow chart for illustrating another operation sequence of a battery pack according to an embodiment of the present invention.

**DETAILED DESCRIPTION OF THE EMBODIMENTS**

Hereinafter, a preferred embodiment of the present invention will be described in detail with reference to the accompanying drawing. In the embodiment of the present invention, the same or like reference numerals refer to the same or like elements. In addition, detailed descriptions of the same or like elements will be omitted.

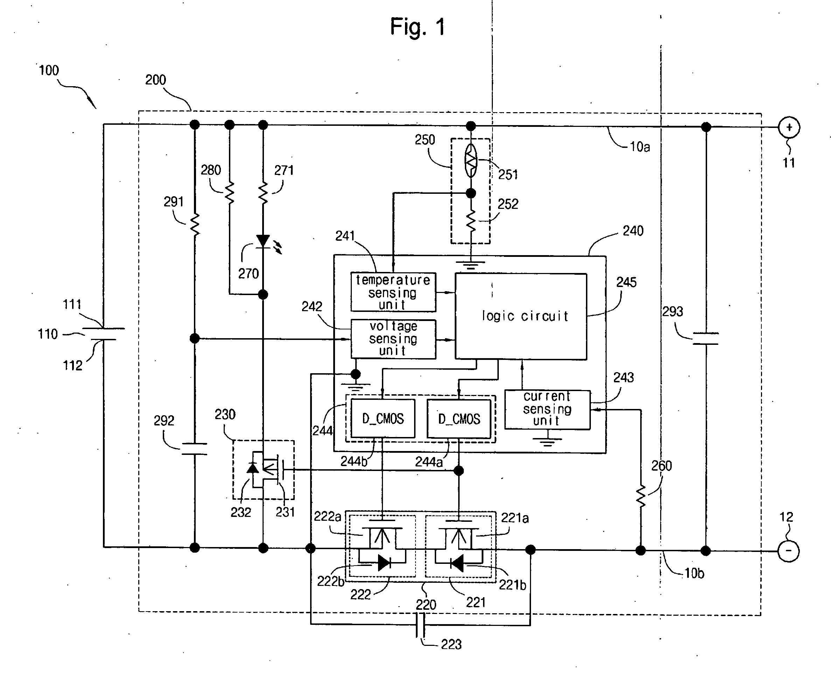

Fig. 1 is a block diagram illustrating a structure of a battery pack according to an embodiment of the present invention.

As illustrated in Fig. 1, a battery pack 100 according to the embodiment of the present invention comprises a battery cell 110, a protection circuit 200, a positive terminal 11 electrically connected to a positive electrode 111 of the battery cell 110 through a first high-current path 10a, and a negative terminal 12 electrically connected to a negative electrode 112 of the battery cell 110 through a second high-current path 10b.

The battery cell 110 is a rechargeable battery having the positive electrode 111 and the negative electrode 112. In one embodiment of the present invention, the battery cell 110 is a lithium ion battery or a lithium polymer battery, and may have a structure in which an electrode assembly and electrolyte are housed in a sealed case. Although one battery cell 110 is illustrated in Fig. 1 showing the embodiment of the present invention, it will be apparent that a plurality of battery cells may be electrically connected to each other in parallel or in series.

The protection circuit 200 comprises a charge/discharge switching unit 220, a self-discharge switching device 230, a control unit 240, a temperature sensor 250, a current sensor 260, a self-discharge indicating member 270 and a self-discharge resistor 280. Further, the protection circuit 200 comprises a capacitor 223 for stabilizing a switch, a resistor 271 for protecting the indicating member, a resistor 291 for sensing a voltage, a capacitor 292 for stabilizing a voltage and a capacitor 293 for stabilizing a charging/discharging voltage. In addition, the temperature sensor 250 comprises a thermistor 251 and a resistor 252 for setting a sensing temperature.

The charge/discharge switching unit 220 comprises a charge switching device 221 and a discharge switching device 222.

The charge switching device 221 includes a charging field effect transistor ("FET") 221a and a parasitic diode 221b for the charging FET. Here, although the parasitic diode 221b for the charging FET is an inevitable element required for performing the manufacturing process of a charging FET 221a, the structural elements thereof will be described separately for the sake of convenience.

A drain and a source of the charging FET 221a are connected to the second high-current path 10b of the battery cell 110. A gate of the charging FET 221a is electrically connected to the control unit 240, and the charging FET 221a is turned-on or turned-off by a control signal output from the control unit 240. For example, if the charging FET 221a receives a high-level signal transmitted from the control unit 240, the charging FET 221a is turned-on to allow a charging current to be flowed from a charger (not shown) to the battery cell 110 or to allow a discharging current to be flowed from the battery cell 110 to an external load (not shown). In one embodiment of the present invention, an N-channel FET may be employed as the charging FET 221a to perform the above operation.

The parasitic diode 221b for the charging FET is electrically connected to the charging FET 221a in parallel. The parasitic diode 221b for the charging FET is disposed in the forward biased direction with respect to a flow direction (clockwise direction in Fig. 1) of the discharging current of the battery cell 110. Accordingly, even if the charging FET 221a is already turned-off by an overcharging protection function for of the battery cell 110, it is possible to discharge the battery cell 110.

The discharge switching device 222 includes a discharging field effect transistor ("FET") 222a and a parasitic diode 222b for the discharging FET. Here, although the parasitic diode 222b for the discharging FET is an inevitable element required for performing the manufacturing process of a discharging FET 222a, the structural elements thereof will be described separately for the sake of convenience.

A drain and a source of the discharging FET 222a are connected to the second high-current path 10b of the battery cell 110. A gate of the discharging FET 222a is electrically connected to the control unit 240, and the discharging FET 222a is turned-on or turned-off by a control signal output from the control unit 240. For example, if the discharging FET 222a receives a high-level signal transmitted from the control unit 240, the charging FET 222a is turned-on to allow a discharging current to be flowed from the battery cell 110 to an external load (not shown) or to allow a charging current to be flowed from a charger (not shown) to the battery cell 110. In one embodiment of the present invention, an N-channel FET may be employed as the discharging FET 222a to perform the above operation.

The parasitic diode 222b for the discharging FET is electrically connected to the discharging FET 222a in parallel. The parasitic diode 222b for the discharging FET is disposed in the forward biased direction with respect to a flow direction (counter-clockwise direction in Fig. 1) of the charging current of the battery cell 110. Accordingly, even if the discharging FET 222a is already turned-off by an over-discharging protection function for of the battery cell 110, it is possible to discharge the battery cell 110.

Meanwhile, the capacitor 223 for stabilizing the switch 223 is connected to the discharge/discharge switching unit 220 in parallel so that the capacitor 223 absorbs an impulse component of a current generated during a switching operation of the charge/discharge switching unit 220.

The self-discharge switching device 230 includes a self-discharging FET 231 and a parasitic diode 232 for the self-discharging FET.

A source of the self-discharging FET 231 is electrically connected to the positive electrode 111 of the battery cell 110, and a drain of the self-discharging FET 231 is electrically connected to the negative electrode 112 of the battery cell 110. In other words, the source of the self-discharging FET 231 is electrically connected to the first high-current path 10a and the drain of the self-discharging FET 231 is electrically connected to the second high-current path 10b. Further, a gate of the self-discharging FET 231 is electrically connected to the control unit 240 and the gate of the charging FET 221 a. In the embodiment of the present invention, a P-channel FET may be utilized as the self-discharging FET 231. Therefore, in a case where the discharging FET 221 a is turned-on, the self-discharging FET 231 becomes turned-off. In addition, in a case where the discharging FET 221 a is turned-off, the self-discharging FET 231 becomes turned-on.

The parasitic diode 232 for the self-discharging FET is electrically connected to the self-discharging FET 231 in parallel. In this case, the parasitic diode 232 for the self-discharging FET is disposed in the reverse biased direction with respect of a direction of a self-discharging current flowed from the positive electrode 111 to the negative electrode 111 of the battery cell 110. As a result, in a state where self-discharging FET 231 is not turned-on by the control unit 240, the self-discharge indicating member 270, the resistor 271 for protecting the indicating member and the self-discharge resistor 280 do not consume the power of the battery cell 110.

The control unit 240 comprises a temperature sensing unit 241, a voltage sensing unit 242, a current sensing unit 243, a driving circuit 244 and a logic circuit 245

The temperature sensing unit 241 is electrically connected to the temperature sensor 250 to convert an analog temperature value of the battery cell 110 transmitted from the temperature sensor 250 into a digital temperature value and then transmit to the logic circuit 245. Substantially, the temperature sensing unit 241 comprises an analog/digital (A/D) convertor. If a temperature of the battery cell 110 exceeds a predetermined reference temperature, the logic circuit 245 outputs a self-discharging signal to the driving circuit 244. That is, the logic circuit 245 outputs the self-discharging signal to a driving circuit 244a for a charge. Then, the driving circuit 244a for a charge outputs a low-level electrical signal to the charge switching device 221, and the charge switching device 221 becomes turned-off. At this time, since the low-level electrical signal is transmitted to the self-discharge switching device 230, the self-discharge switching device 230 becomes turned-on. Then, the battery cell 110 consumes the current through the self-discharging resistor 280 so that the self-discharge operation of the battery cell 110 is performed. Here, as described above, if the discharge switching device 221 is turned-off, the self-discharge switching device 230 becomes turned-on and if the discharge switching device 221 is turned-on, the self-discharge switching device 230 becomes turned-off. These functions are caused by the N-channel type charge switching device 221 and the P-channel type self-discharge switching device 230.

The above-mentioned reference temperature may be set within a range of 40 °C to 75 °C, preferably in the range of 45 °C to 70 °C, even more preferably within a range of 46° to 60°C,. In this case, when the temperature of the battery cell 110 is below the reference temperature, the logic circuit 245 controls the driving circuit 244a for a charge such that a self-discharging signal is not outputted, and so the battery cell 110 is not self-discharged. In addition, when the temperature of the battery cell 110 exceeds the reference temperature, in order to secure a stability of the battery cell 110, the logic circuit 245 sends the self-discharging signal to the driving circuit 244a for a charge to self-discharge the battery cell. The voltage sensing unit 242 is electrically connected to the positive electrode 111 and the negative electrode 112 of the battery cell 110 to sense the analog voltage value of the battery cell 110, converts it into the digital value and provides the digital value to the logic circuit 245. In other words, the voltage sensing unit 242 is electrically connected between the resistor 291 for sensing a voltage and the capacitor 292 for stabilizing a voltage to obtain charging voltage or discharging voltage of the battery cell 110 in the form of an analog value, converts the obtained analog value of the above voltage into the digital value, and then provide the digital value to the logic circuit 245. Substantially, the voltage sensing unit 242 comprises an analog/digital convertor.

In the meantime, the logic circuit 245 judges a self-discharge mode as well as an over-charge protection mode and an over-discharge protection mode according to a voltage of the battery cell 110. On the basis of each mode, the logic circuit 245 sends a control signal to the driving circuit 244 to turn-on or turn-off the charge/discharge switching device 220 and the self-discharge switching device 230.

Below, an over-discharge protection mode, an over-charge protection mode and a self-discharge protection mode are illustrated in more detail.

The over-discharge protection mode is performed when a voltage of the battery cell 110 is lowered below approximately 2,8V, preferably below 3.0 V, more preferably below 3.2 V. It will be apparent that the voltage sensing unit 242 senses a voltage of the battery cell 110. The over-discharge protection mode is a state in which the logic circuit 245 sends an over-discharge protection signal to the driving circuit 244b for a discharge for turning-off the discharge switching device 222 to prevent the battery cell 110 to be over-discharged. However, in a case where the positive terminal 11 and the negative terminal 12 of the battery pack 100 are connected to a charger (not shown), since a charging current supplied from the charger is flowed through the battery cell 110, the parasitic diode 222b of the discharge switching device 222 and the charge switching device 221, it is possible to charge the battery cell 110.

The over-charge protection mode is carried out when the voltage of the battery cell 110 is preferably above approximately 4.5 V, even more preferably above 4.3 V. The over-charge protection mode is a state in which the logic circuit 245 sends an over-charge protection signal to the driving circuit 244a for a charge for turning-off the charge switching device 221 to prevent the battery cell 110 to be over-charged. However, in a case where the positive terminal 11 and the negative terminal 12 of the battery pack 100 are connected to an external load (not shown), since a discharging current supplied from the battery cell 110 is flowed through the parasitic diode 221 b of the charge switching device 221 and the discharge switching device 222, it is possible to discharge the battery cell 110.

At this time, since the charge switching device 221 is turned-off, the self-discharge switching device 230 becomes turned-on. Accordingly, the self-discharging current of the battery cell 110 is flowed through the resistor 271 for protecting the indicating member and the self-discharge indicating member 270. Furthermore, the self-discharging current of the battery cell 110 is flowed through the self-discharge resistor 280. Basically, the battery pack 100 according to the present invention performs the self-discharging operation when a temperature of the battery cell 110 exceeds the predetermined reference temperature. Due to the above, however, the battery pack 100 according to the present invention also performs the self-discharging operation in the over-charge protection mode. As a result, the battery cell 110 is discharged compulsorily when its temperature exceeds the reference temperature and its voltage is an over-charge voltage, and so the battery cell becomes more stable.

By the above operations, the self-discharge switching device 230 is turned-on to self-discharge the battery cell 110. At this time, the charge switching device 221 is turned-on. On the contrary, if the self-discharge mode is stopped, the logic circuit 245 turns-on the charge switching device 221 and turns-off the self-discharge switching device 230. In other words, the safety of the battery pack 100 is improved by concurrently not performing the charge operation and the self-discharge operation in the batter pack 100. Moreover, the battery pack 100 is self-discharged when its temperature is raised above the reference temperature so that a swelling of the battery cell 110 is inhibited and a stability of the battery cell 110 is more improved.

In addition, the logic circuit 245 can send the self-discharge signal to the driving circuit 244a for a charge to turn-on the self-discharge switching device 230 when the temperature of the battery cell 110 sensed by the temperature sensing unit 241 corresponds to the reference temperature, preferably set between 40°C to 75°C, more preferably in the range of 45 °C to 70 °C, even more preferably within a range of 46° to 60 °C, and the voltage of the battery cell 110 is above 3.9 V. In other words, the logic circuit 245 prohibits a self-discharge of the battery cell 110 to prevent waste of the power of the battery cell 110 when the voltage of the battery cell 110 is below 3.9 V. Here, since the logic circuit 245 only needs to be converted to the self-discharge mode at a voltage of 3.9 V to secure a stability of the battery cell 110, an upper limit of the voltage of the battery cell has no special meaning.

The logic circuit 245 stops a self-discharge of the battery cell 110 according to a temperature, a voltage and a discharge state of the battery cell 110.

The temperature sensing unit 241 senses that the temperature of the battery cell 110 is below the reference temperature, and sends the information thereon to the logic circuit 245. Then, the logic circuit 245 sends the self-discharge stopping signal to the driving circuit 244a for a charge to turn-off the self discharge switching device 230. By the above, the self-discharge of the battery cell 110 is stopped. Here, the charge switching device 221 is turned-on, and so the battery cell 110 is in a state in which a charging operation can be performed.

The voltage sensing unit 242 senses that the voltage of the battery cell 110 is below the reference voltage, and sends the information thereon to the logic circuit 245. Then, the logic circuit 245 sends the self-discharge stopping signal to the driving circuit 244a for a charge to turn-off the self discharge switching device 230. The reference voltage may be set in the range of 2,8 to 4.0V, preferably 3.0 V to 3.9V, more preferably 3.2V to 3.9V. In other words, the logic circuit 245 can set the reference voltage between the over-discharge protection voltage and the over-charge protection voltage to stop the self-discharge. Preferably, as described above, a voltage of about 3.9 V is appropriate for the reference voltage.

By doing as above, the self-discharge of the battery cell 110 is stopped. At this time, the charge switching device 221 is tuned-on, and so the battery cell 110 is in a state in which a charging operation can be performed.

The driving circuit 244 includes the driving circuit 244a for a charge and the driving circuit 244b for a discharge.

The driving circuit 244a for a charge is electrically connected between the logic circuit 245 and the charge switching device 221. A power drive type switching circuit such as a C-MOS FET may be utilized as the driving circuit 244a for a charge, and turns-on or turns-off the charge switching device 221 according to a control signal outputted from the logic circuit 245.

The driving circuit 244b for a discharge is electrically connected between the logic circuit 245 and the discharge switching device 222. A power drive type switching circuit such as a C-MOS FET may be employed as the driving circuit 244b for a discharge, and turns-on or turns-off the discharge switching device 222 according to a control signal outputted from the logic circuit 245.

The control unit 240 including the temperature sensing unit 241, the voltage sensing unit 242, the current sensing unit 243, the driving circuit 244 and the logic circuit 245 is electrically connected to the positive electrode 111 and the negative electrode 112 of the battery cell 110 and is operated by the power supplied from the battery cell 110. In other words, the control unit 240 does not receive an external power, but performs itself a charging operation, a discharging operation, a self-discharging operation and an over-current protecting operation by a voltage of the battery cell 110 to secure the stability of the battery pack 100.

As the control unit 240, in addition, an application specific integrated circuit (ASIC) which is a power drive type circuit device may be utilized for directly driving the charge/discharge switching unit 220 according to respective mode. Therefore, the control unit 240 turns-on or turns-off the charge/discharge switching unit 220 and the self-discharge switching device 230 at a very high response speed according to respective mode to protect the battery cell 110.

Meanwhile, the resistor 291 for sensing a voltage is electrically connected between the control unit 240 and the positive electrode 111 of the battery cell 110. In is case, the capacitor 292 for stabilizing a voltage is provided between the resistor 291 for sensing a voltage and the negative electrode 112 of the battery cell 110 to protect the control unit 240 from external static electricity. The current sensor 260 is electrically connected between the control unit 240 and the negative electrode of the battery cell 110. Substantially, the current sensor 260 is a resistor and divides a voltage applied to the resistor with a resistance value to calculate a current value. The current sensor 260 is electrically connected to the current sensing unit 243. Accordingly, the current sensing unit 243 utilizes the current sensor 160 to sense the current and transmits the information on the sensed current to the logic circuit 245. It will be apparent that the current sensing unit 243 may comprise an analog/digital convertor to convert an analog value into a digital value and transmit the digital value to the logic circuit 245. Further, if the logic circuit judges that an over current (a charge current, a discharge current or a short current) is flowed through the high current path 10a and 10b, the logic circuit 245 turns-off the charge/discharge switching unit 220 to protect the battery cell 110.

The temperature sensor 250 is electrically connected to the first high-current path 10a of the battery cell 110 and the control unit 240. In the embodiment of the present invention, the temperature sensor 250 comprises the thermistor 251 whose resistance value is varied according to a temperature and the resistor 252 having a fixed resistance value for setting a sensing temperature. Accordingly, the temperature sensing unit 241 senses a temperature of the battery cell 110 on the basis of a voltage distribution principle of the thermistor 251 and the resistor 252 for setting a sensing temperature.

Here, the resistor 252 for setting a sensing temperature is electrically connected between the thermistor 251 and a ground terminal. Under the same temperature, since a dividing voltage caused by the thermistor 251 and the resistor 252 for setting a sensing temperature is varied according to a resistance value of the resistor 252 for setting a sensing temperature, it is possible to adjust a sensing temperature range of the temperature sensing unit 241.

For example, under a circumference that the thermistor 251 is defined as "R3" and the resistor 252 for setting a sensing temperature is defined as "R4", a dividing voltage "Vth" caused by R3 and R4 is generally obtained by the following Equation 1. Here, the dividing voltage "Vth" is a voltage detected by the temperature sensing unit 241 and "VDD" is a voltage of the battery cell 110.

## Equation 1

$$V_{th} = VDD*R4/(R3 + R4)$$

In addition, the resistance value R3 of the thermistor 251 is obtained by the following Equation 2.

## Equation 2

$$R3 = R0expB(1/T - 1/T0)$$

Wherein, R3 : resistance value in an ambient temperature of T(K);
R0 : resistance value at an ambient temperature of T0(K);
B : constant of the thermistor.

Accordingly, from the above Equations 1 and 2, the Equation 3 corresponding to a temperature T to be sensed can be obtained.

## Equation 3

$$T=1/(1/T0 + (ln(R3/R0)/B)$$

Wherein, "R3" is experimentally 3R4/17.

By the above Equations, a temperature "T" to be sensed can be determined by selecting appropriately the thermistor 251 and the resistor 252 for setting a sensing temperature.

The self-discharge indicating member 270 is electrically connected between the self-discharge switching device 230 and the first high-current path 10a of the battery cell 110. In a case where the self-discharge switching device 230 is turned-on by a control signal of the control unit 240, the self-discharge indicating member 270 indicates visually that the self-discharge switching device 230 is being operated. For example, a light emitting diode may be utilized as the self-discharge indicating member 270. Of course, the self-discharge indicating member 270 consumes a current of the battery cell 110 so that the battery cell 110 is self-discharged more rapidly by the self-discharge indicating member.

The resistor 271 for protecting the indicating member is electrically connected between the self-discharge indicating member 270 and the first high-current path 10a of the battery cell 110. The resistor 271 for protecting the indicating member allows the predetermined voltage to be applied to the self-discharge indicating member 270 to prevent the self-discharge indicating member 270 from being damaged. Of course, since the resistor 271 for protecting the indicating member consumes a current of the battery cell 110, the battery cell 110 is self-discharged more rapidly by the resistor for protecting the indicating member.

The resistor 280 for self-discharge is electrically connected between the self-discharge switching device 230 and the first high-current path 10a of the battery cell 110. Here, the resistor 280 for self-discharge is connected to the resistor 271 for protecting the indicating member in parallel. The resistor 280 for self-discharge makes the battery cell 110 be discharged more rapidly to more enhance the stability of the battery pack 100. Here, the resistor 280 for self-discharge as well as the self-discharge indicating member 270 and the resistor 271 for protecting the indicating member cause a self-discharge of the battery cell 110. Accordingly, there is no need to provide the resistor 280 for self-discharging the battery cell 110. In addition, there is no need to provide the self-discharge indicating member 270 and the resistor 271 for protecting the indicating member for self-discharging the battery cell 110.

The capacitor 293 for stabilizing a charging/discharging voltage is electrically connected to the positive electrode 11 and the negative electrode 12. The capacitor 293 for stabilizing a charging/discharging voltage absorbs an impulse component of the current generated when an external load such as a charger or a portable electronic equipment is connected to the positive electrode 11 and the negative electrode 12, and so the capacitor 293 for stabilizing a charging/discharging voltage protects the control unit 240.

Below, an operation of the control unit constituting the battery pack as described above is illustrated. In particular, an operation of the logic circuit of the control unit is illustrated.

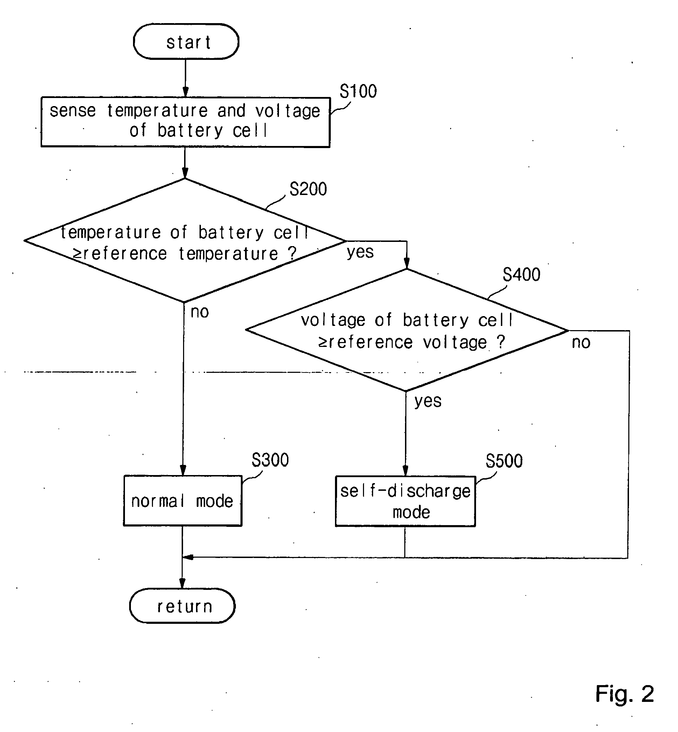

Fig. 2 is flow chart for illustrating an operation sequence of the battery pack according to an embodiment of the present invention.

As shown in Fig. 2, an operation of the protection circuit for the battery pack according to the embodiment of the present invention comprises the step S100 of sensing a temperature and a voltage of the battery cell, the step S200 of judging whether a temperature of the battery cell is above the reference temperature, the step S400 of judging whether a voltage of the battery cell is above the reference voltage, and the step S500 of self-discharge mode.

Here, in the step S200, if the logic circuit judges that a temperature of the battery cell is below the reference temperature, the normal mode step S300 is performed. The normal mode means the over-charge protection mode, the over-discharge protection mode or the over-current protection mode.

Meanwhile, without additional description, it should be understood that the subject in the steps is the control unit of the battery pact, that is, the logic circuit.

In the step S100 of sensing the temperature and voltage of the battery cell, the control unit senses a temperature of the battery cell by means of the temperature sensing unit and senses a voltage of the battery cell by means of the voltage sensing unit.

In the step S200 of judging whether the temperature of the battery cell is above the reference temperature, the control unit judges whether the temperature of the battery cell sensed as described above exceeds the reference temperature. Here, although approximately 40 °C to 75 °C, preferably 45 °C to 70 °C, even more preferably 46° to 60 °C, may be set as the reference temperature, the present invention is not limited thereto. In other words, the reference temperature may be changed according to the kind, shape, structure and capacitance of the battery cell. However, it is preferable to set approximately 40 °C, preferably 45 °C as the reference temperature since a generation of swelling phenomenon begins at a temperature of approximately 45 °C in the lithium ion battery or a lithium polymer battery.

If the temperature of the battery cell is above the reference temperature in the step S200, the step S400 is carried out.

In the step S400 of judging whether the voltage of the battery cell is above the reference voltage, the control unit judges whether the voltage of the battery cell sensed as described above is above the reference voltage. Here, although approximately 2,8 to 4.0V, preferably 3.0 V to 3.9V, more preferably 3.2V to 3.9V may be set as the reference voltage, the present invention is not limited thereto. In other words, the reference voltage may be changed according to the kind, shape, structure and capacitance of the battery cell. However, it is preferable to set approximately 3.9 V as the reference voltage since a generation of swelling phenomenon begins at a temperature of approximately 45 °C or more and at a voltage of approximately 3.9 V in the lithium ion battery or a lithium polymer battery.

If the voltage of the battery cell is above the reference voltage in the step S400, the step S500 is executed.

In the self-discharge mode step S500, the control unit self-discharges until the voltage of the battery cell is reached to a certain level. In other words, the control unit turns-on the self-discharge switching device to discharge the battery cell until the voltage of the battery cell is reached to approximately 3.8 V. However, the present invention is not limited to the above the voltage level. That is, the voltage level at which the self-discharge of the battery cell is stopped may be varied according to the kind, shape, structure and capacitance of the battery cell.

As shown in Fig. 2, in the meantime, although an operation may be performed in the order of the step S200 and the step S400, the present invention is not limited thereto. In other words, an operation of the present invention may be performed in the order of the step S400 and the step S200. It will be apparent that the self-discharge mode step S500 is performed if all the above two steps (conditions) are finally satisfied.

For example, in a case where the temperature of the battery cell is above 40°, preferably 45 °C, more preferably 50 °C and the voltage of the battery cell is above 3.9 V, the self-discharge mode step S500 is performed.

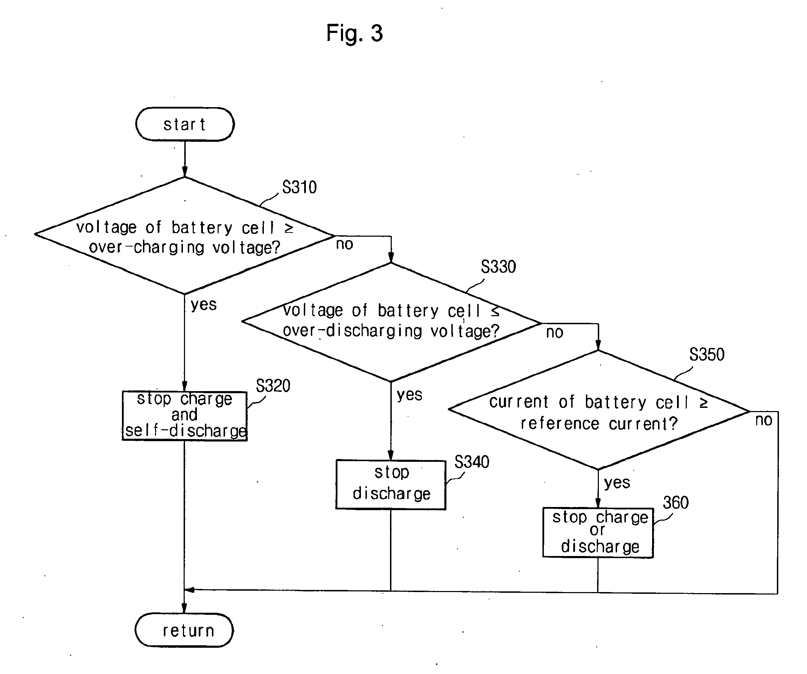

Fig. 3 is flow chart for illustrating another operation sequence of a battery pack according to an embodiment of the present invention.

The normal mode is performed if the temperature of the battery cell is below the reference temperature. In other words, in a case where the result in the step S200 (see Fig. 2) is "No", the normal mode is performed.

The normal mode comprises the step S310 of judging whether the voltage of the battery cell is above the over-charging voltage; the step S320 of stopping a charge and of performing a self-discharge in a case where the result of the step S310 is "Yes"; the step S330 of judging whether the voltage of the battery cell is below the over-discharging voltage in a case where the result of the step S31 0 is "No"; the step S340 of stopping a discharge in a case where the result of the step S330 is "Yes"; the step S350 of judging whether the current of the battery cell is above the reference current; and the step S360 of stopping a charge or a discharge in a case where the result of the step S350 is "Yes".

In the step S310 of judging whether the voltage of the battery cell is above the over-charging voltage, the control unit judges whether the voltage of the battery cell is above the over-charging voltage (for example, 4.5 V) by means of the voltage sensing unit.

In the step S320 of stopping a charge and performing a self-discharge, the control unit sends a charge stopping signal to the charge switching device to turn-off the charge switching device. Accordingly, a charge of the battery cell is stopped. In this state, however, a discharge of the battery cell can be performed by the parasitic diode of the charge switching device. At this time, the self-discharge switching device is turned-on, and so the battery cell is self-discharged. In the present invention, in other words, the self-discharge switching device is automatically turned-on when the charge switching device is turned-off, and so the above operation can be obtained. As a result, the over-charging state of the battery cell is rapidly released.

In the step S330 of judging whether the voltage of the battery cell is below the over-discharging voltage, the control unit judges whether the voltage of the battery cell is below the over-discharging voltage (for example, 3.0 volts) by means of the voltage sensing unit.

In the step S340 of stopping a discharge, the control unit sends a discharge stopping signal to the discharge switching device to turn-off the discharge switching device. Accordingly, a discharge of the battery cell is stopped. In this state, however, a charge of the battery cell can be performed by the parasitic diode of the discharge switching device.

In the step S350 of judging whether the current of the battery cell is above the reference current, the control unit judges whether the current (a charging current or a discharging current) of the battery cell is above the predetermined current by means of the current sensing unit.

In the step S360 of stopping a charge or a discharge, the control unit sends a charge stopping signal or a discharge stopping signal to the charge switching device or the discharge switching device to turn-off the charge switching device or the discharge switching device.

In addition, the steps 310, 330 and 350 can be performed in the order which differs from that as described above. The method of the present invention can be performed in the orders of the step 330, the step 350 and the step S310, or the step 350, the step 310 and the step S320, or the step 330, the step 310 and the step S350, or the step 350, the step 330 and the step S310, or the step 310, the step 330 and the step S350. However, the present invention is not limited to the above orders.

Although the embodiment of the present invention has been described in detail hereinabove, it should be understood that many variations and modifications of the basic inventive concept herein described will still fall within the scope of the present invention as defined in the appended claims.

**Claims**

1. A protection circuit (200) for a battery pack (100) including a rechargeable battery cell (110) having a positive electrode (111) and a negative electrode (112), comprising:

    a self-discharge switching device (230) connected electrically to the positive electrode (111) and the negative electrode (112) of the battery cell (110) and comprising a self-discharging field effect transistor (231) and a parasitic diode (232) for the self-discharging field effect transistor (231);
    a control unit (240) connected electrically to the battery cell (110) and the self-discharge switching device (230) and adapted to turn-on or turn-off the self-discharge switching device (230) as a function of a temperature of the battery cell (110);
    a charge switching device (221) connected electrically between the battery cell (110) and the control unit (240) and comprises a charging field effect transistor (221 a) and a parasitic diode (221 b) for the charging field effect transistor (221 a); and
    a temperature sensor (250) connected electrically to the battery cell (110) and the control unit (240), wherein the temperature sensor (250) senses a temperature of the battery cell (110) and the control unit (240) is adapted to turn-on the self-discharge switching device (230) if the sensed temperature of the battery cell (110) exceeds a reference temperature, wherein:

    the self-discharge switching device (230) is electrically connected to the charge switching device (221),
    the charge switching device (221) is adapted to be turned-off if the self-discharge switching device (230) is turned-on, and the charge switching device (221) is adapted to be turned-on if the self-discharge switching device (230) is turned-off,
**characterized in that**
a gate of the self-discharging FET (231) is electrically connected to the control unit (240) and the gate of the charging FET (221 a).

2. The protection circuit (200) of claim 1, wherein the reference temperature is in a range of 45 °C to 70 °C.

3. The protection circuit (200) of claim 1 or 2, wherein the temperature sensor (250) comprises a thermistor (251).

4. The protection circuit (200) of any of claims 1 to 3, wherein the temperature sensor (250) further comprises a resistor (252) for setting a sensing temperature.

5. The protection circuit (200) of any of the previous claims, wherein the control unit (240) is adapted to sense a voltage of the battery cell (110) and to turn-on the self-discharge switching device (230) if the voltage of the battery cell (110) exceeds a reference voltage.

6. The protection circuit (200) of claim 5, wherein the reference voltage is 3.0 V to 3.9 V.

7. The protection circuit (200) of any of the previous claims, further comprising a self-discharge resistor (280) connected electrically between the battery cell (110) and the self-discharge switching device (230).

8. The protection circuit (200) of any of the previous claims, further comprising a self-discharge indicating member (270) connected electrically between the battery cell (110) and the self-discharge switching device (230).

9. The protection circuit (200) of claim 8, wherein the self-discharge indicating member (270) is a light-emitting diode.

10. The protection circuit (200) of claim 8 or 9, further comprising a resistor (271) connected electrically between the battery cell (110) and the self-discharge indicating member (270) and adapted to protect the self-discharge indicating member (270).

11. The protection circuit (200) of any of the previous claims, wherein the control unit (240) comprises a temperature sensing unit (241) connected electrically to the temperature sensor (250) to sense a temperature of the battery cell (110);

a voltage sensing unit (242) connected electrically to the battery cell (110) to sense a voltage of the battery cell (110); and

a driving circuit (244) connected electrically to the charge switching device (221) and the self-discharge switching device (230) and adapted to turn-on or turn-off the charge switching device (221) and the self-discharge switching device (230) as a function of the temperature sensed by the temperature sensing unit (241) and the voltage sensed by the voltage sensing unit (242).

12. A battery pack (100) comprising a rechargeable battery cell (110) having a positive electrode (111) and a negative electrode (112) and a protection circuit (200) of any of the claims 1-11.

**Patentansprüche**

1. Schutzschaltung (200) für ein Batteriepack (100) mit einer eine positive Elektrode (111) und eine negative Elektrode (112) aufweisenden wiederaufladbaren Batteriezelle (110), umfassend:

   eine Selbstentladungsschaltvorrichtung (230), die elektrisch mit der positiven Elektrode (111) und der negativen Elektrode (112) der Batteriezelle (110) verbunden ist und einen selbstentladenden Feldeffekttransistor (231) sowie eine parasitäre Diode (232) für den selbstentladenden Feldeffekttransistor (231) umfasst;
   eine Steuereinheit (240), die elektrisch mit der Batteriezelle (110) und der Selbstentladungsschaltvorrichtung (230) verbunden ist, und ausgebildet ist, die Selbstentladungsschaltvorrichtung (230) in Abhängigkeit einer Temperatur der Batteriezelle (110) ein- oder auszuschalten;
   eine Ladungsschaltvorrichtung (221), die elektrisch zwischen die Batteriezelle (110) und die Steuereinheit (240) geschaltet ist und einen ladenden Feldeffekttransistor (221 a) sowie eine parasitäre Diode (221 b) für den ladenden Feldeffekttransistor (221 a) umfasst; und
   einen Temperatursensor (250), der elektrisch mit der Batteriezelle (110) und der Steuereinheit (240) verbunden ist, wobei der Temperatursensor (250) eine Temperatur der Batteriezelle (110) erfasst und die Steuereinheit (240) ausgebildet ist, die Selbstentladungsschaltvorrichtung (230) einzuschalten, wenn die erfasste Temperatur der Batteriezelle (110) eine Referenztemperatur überschreitet,
   wobei:

   die Selbstentladungsschaltvorrichtung (230) elektrisch mit der Ladungsschaltvorrichtung (221) verbunden ist,
die Ladungsschaltvorrichtung (221) ausgebildet ist, beim Einschalten der Selbstentladungsschaltvorrichtung (230) ausgeschaltet zu werden, und die Ladungsschaltvorrichtung (221) ausgebildet ist, beim Ausschalten der Selbstentladungsschaltvorrichtung (230) eingeschaltet zu werden,
**dadurch gekennzeichnet, dass**
ein Gate des selbstentladenden FET (231) elektrisch mit der Steuereinheit (240) und dem Gate des ladenden FET (221 a) verbunden ist.

2. Schutzschaltung (200) nach Anspruch 1, wobei die Referenztemperatur in einem Bereich von 45°C bis 70°C liegt.

3. Schutzschaltung (200) nach Anspruch 1 oder 2, wobei der Temperatursensor (250) einen Thermistor (251) umfasst.

4. Schutzschaltung (200) nach einem der Ansprüche 1 bis 3, wobei der Temperatursensor (250) ferner einen Widerstand (252) zum Einstellen einer Erfassungstemperatur umfasst.

5. Schutzschaltung (200) nach einem der vorstehenden Ansprüche, wobei die Steuereinheit (240) ausgebildet ist, eine Spannung der Batteriezelle (110) zu erfassen und die Selbstentladungsschaltvorrichtung (230) einzuschalten, wenn die Spannung der Batteriezelle (110) eine Referenzspannung überschreitet.

6. Schutzschaltung (200) nach Anspruch 5, wobei die Referenzspannung 3,0 V bis 3,9 V beträgt.

7. Schutzschaltung (200) nach einem der vorstehenden Ansprüche, ferner umfassend einen Selbstentladungswiderstand (280), der elektrisch zwischen die Batteriezelle (110) und die Selbstentladungsschaltvorrichtung (230) geschaltet ist.

8. Schutzschaltung (200) nach einem der vorstehenden Ansprüche, ferner umfassend ein Selbstentladungsanzeigeelement (270), das elektrisch zwischen die Batteriezelle (110) und die Selbstentladungsschaltvorrichtung (230) geschaltet ist.

9. Schutzschaltung (200) nach Anspruch 8, wobei das Selbstentladungsanzeigeelement (270) eine Leuchtdiode ist.

10. Schutzschaltung (200) nach Anspruch 8 oder 9, ferner umfassend einen Widerstand (271), der elektrisch zwischen die Batteriezelle (110) und das Selbstentladungsanzeigeelement (270) geschaltet ist, und ausgebildet ist, das Selbstentladungsanzeigeelement (270) zu schützen.

**11.** Schutzschaltung (200) nach einem der vorstehenden Ansprüche, wobei die Steuereinheit (240) umfasst:

eine Temperaturerfassungseinheit (241), die elektrisch mit dem Temperatursensor (250) zum Erfassen einer Temperatur der Batteriezelle (110) verbunden ist;
eine Spannungserfassungseinheit (242), die elektrisch mit der Batteriezelle (110) zum Erfassen einer Spannung der Batteriezelle (110) verbunden ist; und
eine Treiberschaltung (244), die elektrisch mit der Ladungsschaltvorrichtung (221) und der Selbstentladungsschaltvorrichtung (230) verbunden ist, und ausgebildet ist, die Ladungsschaltvorrichtung (221) und die Selbstentladungsschaltvorrichtung (230) in Abhängigkeit der von der Temperaturerfassungseinheit (241) erfassten Temperatur und der von der Spannungserfassungseinheit (242) erfassten Spannung ein- oder auszuschalten.

**12.** Batteriepack (100), umfassend eine wiederaufladbare Batteriezelle (110) mit einer positiven Elektrode (111) und einer negativen Elektrode (112) sowie einer Schutzschaltung (200) nach einem der Ansprüche 1 bis 11.

**Revendications**

**1.** Circuit de protection (200) pour un bloc-batterie (100) comportant un élément de batterie rechargeable (110) ayant une électrode positive (111) et une électrode négative (112), comprenant :

un dispositif de commutation d'autodécharge (230) électriquement relié à l'électrode positive (111) et à l'électrode négative (112) de l'élément de batterie (110) et comprenant un transistor à effet de champ d'autodécharge (231) et une diode parasite (232) pour le transistor à effet de champ d'autodécharge (231) ;
une unité de commande (240) électriquement reliée à l'élément de batterie (110) et au dispositif de commutation d'autodécharge (230) et adaptée pour activer ou désactiver le dispositif de commutation d'autodécharge (230) en fonction d'une température de l'élément de batterie (110) ;
un dispositif de commutation de charge (221) électriquement relié entre l'élément de batterie (110) et l'unité de commande (240) et comprend un transistor à effet de champ de charge (221 a) et une diode parasite (221 b) pour le transistor à effet de champ de charge (221 a) ; et
un capteur de température (250) électriquement relié à l'élément de batterie (110) et à l'unité de commande (240), où le capteur de température (250) détecte une température de l'élément de batterie (110) et l'unité de commande (240) est adaptée pour activer le dispositif de commutation d'autodécharge (230) si la température détectée de l'élément de batterie (110) dépasse une température de référence,
où :

le dispositif de commutation d'autodécharge (230) est électriquement relié au dispositif de commutation de charge (221),
le dispositif de commutation de charge (221) est adapté pour être désactivé si le dispositif de commutation d'autodécharge (230) est activé, et le dispositif de commutation de charge (221) est adapté pour être activé si le dispositif de commutation d'autodécharge (230) est désactivé,
**caractérisé en ce qu'**
une grille du FET d'autodécharge (231) est électriquement reliée à l'unité de commande (240) et à la grille du FET de charge (221 a).

**2.** Circuit de protection (200) de la revendication 1, dans lequel la température de référence se trouve dans une plage allant de 45°C à 70°C.

**3.** Circuit de protection (200) de la revendication 1 ou 2, dans lequel le capteur de température (250) comprend une thermistance (251).

**4.** Circuit de protection (200) de l'une des revendications 1 à 3, dans lequel le capteur de température (250) comprend en outre une résistance (252) permettant de régler une température de détection.

**5.** Circuit de protection (200) de l'une des revendications précédentes, dans lequel l'unité de commande (240) est adaptée pour détecter une tension de l'élément de batterie (110) et pour activer le dispositif de commutation d'autodécharge (230) si la tension de l'élément de batterie (110) dépasse une tension de référence.

**6.** Circuit de protection (200) de la revendication 5, dans lequel la tension de référence se trouve dans la plage allant de 3,0 V à 3,9 V.

**7.** Circuit de protection (200) de l'une des revendications précédentes, comprenant en outre une résistance d'autodécharge (280) électriquement reliée entre l'élément de batterie (110) et le dispositif de commutation d'autodécharge (230).

8.　Circuit de protection (200) de l'une des revendications précédentes, comprenant en outre un élément d'indication d'autodécharge (270) électriquement relié entre l'élément de batterie (110) et le dispositif de commutation d'autodécharge (230).

9.　Circuit de protection (200) de la revendication 8, dans lequel l'élément d'indication d'autodécharge (270) est une diode électroluminescente.

10.　Circuit de protection (200) de la revendication 8 ou 9, comprenant en outre une résistance (271) électriquement reliée entre l'élément de batterie (110) et l'élément d'indication d'autodécharge (270) et adaptée pour protéger l'élément d'indication d'autodécharge (270).

11.　Circuit de protection (200) de l'une des revendications précédentes, dans lequel l'unité de commande (240) comprend
une unité de détection de température (241) électriquement reliée au capteur de température (250) pour détecter une température de l'élément de batterie (110) ;
une unité de détection de tension (242) électriquement reliée à l'élément de batterie (110) pour détecter une tension de l'élément de batterie (110) ; et
un circuit d'attaque (244) électriquement relié au dispositif de commutation de charge (221) et au dispositif de commutation d'autodécharge (230) et adapté pour activer ou désactiver le dispositif de commutation de charge (221) et le dispositif de commutation d'autodécharge (230) en fonction de la température détectée par l'unité de détection de température (241) et de la tension détectée par l'unité de détection de tension (242).

12.　Bloc-batterie (100) comprenant un élément de batterie rechargeable (110) ayant une électrode positive (111) et une électrode négative (112) et un circuit de protection (200) de l'une des revendications 1 à 11.

Fig. 1

EP 2 296 249 B1

```
                          ┌─────────┐
                          │  start  │
                          └─────────┘
                               │
                               ▼
                   ┌───────────────────────┐  S100
                   │ sense temperature and voltage │
                   │      of battery cell       │
                   └───────────────────────┘
                               │
                               ▼
                           S200
                      ╱           ╲
                    ╱               ╲
                  ╱ temperature of battery cell ╲  yes
                  ╲  ≥reference temperature ?   ╱─────┐
                    ╲               ╱                 │
                      ╲    no     ╱                   ▼
                           │                        S400
                           │                   ╱           ╲
                           │                 ╱               ╲
                           │               ╱ voltage of battery cell ╲  no
                           │               ╲  ≥reference voltage ?   ╱─────┐
                           │                 ╲               ╱             │
                           │                   ╲    yes    ╱               │
                           │                        │                      │
                           ▼                        ▼                      │
                      ┌─────────┐ S300         ┌──────────────┐ S500       │
                      │ normal mode │          │ self-discharge │          │
                      └─────────┘               │     mode     │           │
                           │                    └──────────────┘           │
                           │                        │                      │
                           ◄───────────────────────────────────────────────┘
                           │
                           ▼
                      ┌─────────┐
                      │ return  │
                      └─────────┘
```

Fig. 2

Fig. 3

EP 2 296 249 B1

```
                        ┌─────────┐
                        │  start  │
                        └─────────┘
                             │
                             ▼           S310
                     ╱───────────────────╲
                    ╱  voltage of battery  ╲
                    ╲   cell ≥              ╱──── no
                     ╲ over-charging       ╱        │
                      ╲  voltage?         ╱         │
                       ╲─────────────────╱          ▼           S330
                             │                ╱──────────────────╲
                            yes              ╱  voltage of battery ╲
                             │               ╲   cell ≤            ╱──── no
                             ▼               ╲ over-discharging    ╱       │
                    ┌─────────────┐ S320       ╲  voltage?        ╱        │
                    │ stop charge │             ╲───────────────╱         ▼          S350
                    │    and      │                   │             ╱──────────────────╲
                    │self-discharge│                 yes           ╱ current of battery ╲
                    └─────────────┘                   │            ╲  cell ≥            ╱──── no
                             │                        ▼            ╲ reference current? ╱      │
                             │               ┌─────────────┐ S340   ╲─────────────────╱       │
                             │               │    stop     │              │                   │
                             │               │  discharge  │             yes                  │
                             │               └─────────────┘              │                   │
                             │                      │                      ▼         360       │
                             │                      │             ┌─────────────┐              │
                             │                      │             │ stop charge │              │
                             │                      │             │    or       │              │
                             │                      │             │  discharge  │              │
                             │                      │             └─────────────┘              │
                             │                      │                      │                   │
                             │◄─────────────────────┴──────────────────────┴───────────────────┘
                             ▼
                        ┌─────────┐
                        │ return  │
                        └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1096637 A1
- US 2008018304 A1
- GB 2226716 A
- JP 2006352998 A